(19) Europäisches Patentamt
European Patent Office
Office européen des brevets

(11) **EP 2 878 977 A1**

(12) **EUROPEAN PATENT APPLICATION**

(43) Date of publication:
**03.06.2015 Bulletin 2015/23**

(51) Int Cl.:
**G02B 1/11** (2015.01)

(21) Application number: **13005573.4**

(22) Date of filing: **29.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FOM Institute for Atomic and Molecular Physics**
**1098 XG Amsterdam (NL)**

(72) Inventors:
• **Spinelli, Pierpaolo**
**1098 XG Amsterdam (NL)**
• **Van de Groep, Jorik**
**1098 XG Amsterdam (NL)**
• **Polman, Albert**
**1098 XG Amsterdam (NL)**

(74) Representative: **De Vries & Metman**
**Overschiestraat 180**
**1062 XK Amsterdam (NL)**

(54) **Nanopatterned antireflection coating**

(57)    A broadband omnidirectional antireflection structure is described and a method of fabricating such structure. The structure comprising a substrate and a nanopatterned antireflection coating over said substrate, said coating comprising an array of nanoparticles and/or nanoholes, the material of said substrate having refractive index $n_{sub}$ and the material forming said nanoparticles and/or nanoholes having a refractive index $n_{np}$; said substrate and said nanoparticles and/or nanoholes being in contact with a medium that has a refractive index medium; wherein the geometrical filling fraction $\eta_G$ of said nanoparticles and/or nanoholes approximately matches the optimal filling fraction of the substrate/nanoparticle system.

**FIG. 1A**

EP 2 878 977 A1

**Description**

Field of the invention

The invention relates to antireflection coatings, and, in particular, though not exclusively, to nanopatterned antireflection coating structure, processes for manufacturing nanopatterned antireflection coating structures and use of such antireflection coating structure in an optical or electronical device.

Background of the invention

Antireflection coatings (ARCs) are used to reduce the reflection of light in a wide range of applications. For example, making effective antireflection coatings for glass surfaces has become of great importance, as glass is used in several applications, including but not limited to windows, lenses, television screens, computers, smartphones, solar panels, optical components etc.

The reflectivity of a bare air-glass interface is ~4%, depending on the refractive index of the glass. Although this seems a low number, for many applications this reflectivity is unwanted. For example, it can be difficult to read a text on a computer or smartphone display because of the very small reflection of sunlight towards the eye. Also, for solar panels, the 4% reflection loss at the glass surface is an important loss factor that is ideally avoided.

Conventional ARCs are based on the destructive interference of light reflected by the coating layer interfaces. For a single-layer ARC the optimal refractive index is $\mathrm{n}=\sqrt{n_1 n_2}$, where n1 is the index of the medium where incident light propagates, and n2 the index of the substrate. The ideal ARC thickness is one quarter of the wavelength for which the ARC is optimized. Glass typically has a refractive index n of around 1.5 and air has a refractive index of around 1. Hence, a single-layer ARC with index 1.22 with a thickness of approximately 125 nm would then be needed for optimal antireflection properties in the visible spectrum.

Unfortunately, there exist no natural dielectric materials with such a low refractive index. Some very-low-index materials are $MgF_2$ (n=1.38) and fluoropolymers (n=1.3). An optimized $MgF_2$ ARC layer applied to a glass surface (with the glass index n=1.50) reduces the reflectance from 4% to about 1.7% for one wavelength and angle of incidence. Multiple-layer ARCs made by alternating low- and high-index dielectrics may reduce the reflectivity down to 0.1%. These ARCs, however, are more difficult to make and have high costs, especially when fabricating such multilayers for large area surfaces.

Furthermore, a major disadvantage of multiple-layer ARCs is that their minimum reflectivity occurs for only one wavelength and angle of incidence. Other dielectric materials, such as nano-porous dielectrics, may also have a relatively low index, however these randomly textured materials cannot guarantee sufficient uniformity of the antireflection properties over large areas. Due to the randomness of these materials accurate control of the optical properties is difficult, in particular on curved or flexible substrates.

Hence, from the above it follows that there is a need in the art for improved ARC coatings that can be precisely engineered for particular materials and/or and that can be fabricated with uniformity over large area surfaces using a simple and cost efficient method.

Summary of the invention

It is an objective of the invention to reduce or eliminate at least one of the drawbacks known in the prior art. In an aspect the invention may relate to a broadband omnidirectional antireflection structure comprising: a substrate and a nanopatterned antireflection coating, preferably a nanopatterned solgel antireflection coating, over said substrate, said coating comprising an array of nanoparticles and/or nanoholes, wherein the material of said substrate has refractive index $n_{sub}$, the material forming said nanoparticles has a refractive index $n_{np}$ and/or the material in which said nanoholes are formed has a refractive index $n_{coat}$, wherein said substrate and said nanoparticles and/or nanoholes are in contact with a medium having a refractive index $n_{medium}$; wherein the filling fraction of said nanoparticles $\eta_{np}$ and/or nanoholes $\eta_{holes}$ approximately matches the optimal filling fraction of the nanoparticle system $\eta_{np}^*$ and/or the nanohole system $\eta_h^*$.

Here, the filling fraction $\eta_{np}$ for nanoparticles may be defined as:

$$\eta_{np} = \frac{V_{np}}{V_{np} + V_{medium}}$$

where $V_{np}$ corresponds to the volume of the nanoparticle material in a unit cell of the layer, and $V_{medium}$ is the volume of the medium in a unit cell of the layer and the optimal filling fraction $\eta_{np}^*$ of an array of nanoparticles may be defined as:

$$\eta_{np}^* = \frac{\sqrt{n_{sub} n_{medium}} - n_{medium}}{n_{np} - n_{medium}}$$

The filling fraction $\eta_{hole}$ for nanoholes may be defined as:

$$\eta_{hole} = \frac{V_{hol}}{V_{coat} + V_{holes}}$$

where $V_{holes}$ corresponds to the volume of the nanoholes in a unit cell of the layer, and $V_{coat}$ is the volume of coating material in a unit cell comprising the nanoholes; and, the optimal filling fraction $\eta_h^*$ of an array of nanoholes may be defined as:

$$\eta_h^* = \frac{\sqrt{n_{sub}n_{medium}} - n_{coat}}{n_{medium} - n_{coat}}$$

The nanostructured ARCs of the invention are very efficient ARC coatings that can be made the basis of simple and cheap dielectric materials such as glass (silica) that have a refractive index that substantially matches the optimal refractive index for a single-layer ARC. The specular reflection of both a random and periodic nanostructured ARCs according to the invention is below 1% for AOIs up to 50°. This is a major improvement over standard glass and even glass substrates with an MgF2 coating. The nanoparticle ARC may thus be used to significantly reduce unwanted glare effects on glass surfaces. It is submitted that the advantageous properties are a result of the dielectric and geometrical parameters of the substrate and the nanoparticle disposed thereon.

In an embodiment, the thickness of at least part of said nanoparticles and/or the depth of said nanoholes is approximately equal to $\lambda/4n_{eff}$ wherein $\lambda$ is the wavelength for which the antireflection coating is optimize, preferably $\lambda$ being selected in a range between 500 nm and 630 nm; and, wherein for an array of nanoparticles $n_{eff}$ is defined as:

$$n_{eff} = \frac{V_{np}n_{np} + V_{medium}n_{medium}}{V_{np} + V_{medium}}$$

and for an array of nanoholes $n_{eff}$ is defined as:

$$n_{eff} = \frac{V_{coat}n_{coat} + V_{holes}n_{medium}}{V_{coat} + V_{holes}}$$

In an embodiment, a substrate may comprise one or more different layers of different materials. Substrate materials may comprise a polymer based materials including a polyimide or polyethylene naphthalate (PEN) and/or polyethylene terephthalate (PET), PEN or PET or derivatives thereof. Further, the substrate material may comprise a semiconductor, e.g. a III-V semiconductor or a type IV semiconductor such as silicon. In further embodiment a substrate may be composed of one or more layers of any of the above materials. The substrate may be part of an (optical) device, e.g. a screen of a display of a media device, a touchscreen, a television, the windshield of a car, a solar cell, an optoelectronic device, etc.

In an embodiment, the material of said substrate may have a refractive index between 1,3 and 4, preferably between 1,4 and 2, more preferably 1,4 and 1,7.

In an embodiment the material forming said nanoparticles and/or nanoholes may be an oxide, preferably silicium oxide, titanium oxide, hafnium oxide, zirconium oxide, tin oxide, zinc oxide and/or germanium oxide.

In an embodiment, the material forming said nanoparticles and/or or the material in which said nanoholes are formed may have a refractive index that is selected in a ragen between 1,3 and 4, preferably between 1,4 and 2, more preferably 1,4 and 1,7.

In an embodiment, at least part of said nanoparticles may form array of nanoparticules wherein the distance between said nanoparticles is defined by pitch P.

In an embodiment at least part of said nanoparticles may be shaped as a cylinder, hemisphere, sphere, truncated pyramid or truncated cone.

In an embodiment, said nanoparticles form an array having a pitch smaller than 400 nm, preferably smaller than 200 nm.

In a further embodiment, at least part of said nanoparticles may form an array of nanocylinders wherein the ratio between the radius of a nanocylinder and the pitch of said array approximately matching the following condition:

$$\frac{R}{P} \approx \frac{1}{\pi}\frac{\sqrt{n_{sub}n_{medium}} - n_{medium}}{n_{np} - n_{medium}}$$

or wherein at least part of said nanoparticles form an array of nanoholes and the ratio between the radius of a nanohole and the pitch of said array approximately matching the following condition:

$$\frac{R}{P} = \frac{1}{\pi}\frac{\sqrt{n_{sub}n_{medium}} - n_{coat}}{n_{medium} - n_{coat}}$$

In the above "approximately equal" may include deviations from the optimal filling fraction of 20% or less, preferably 10% or less, more preferably 5% or less. Also nanoparticle ARCs that deviate from the optimal condition may provide an advantageous ARC effect with respect to known ARC layers.

In a further aspect, the invention may relate to a method of fabricating a broadband omnidirectional antireflection structure comprising: providing substrate having refractive index $n_{sub}$; applying an inorganic solgel coating over said substrate, said solgel coating having a refractive index $n_{np}$; transferring the nanostructures of said nanostructured imprint stamp into said solgel coating in order to form a nanopatterned antireflection coating over said substrate, said coating comprising an array of nanoparticles and/or nanoholes; wherein the filling fraction of said nanoparticles $\eta_{np}$ and/or nanoholes $\eta_{holes}$ approximately matches the optimal filling fraction of the nanoparticle system $\eta_{np}^*$ and/or the nanohole system $\eta_h^*$.

Hence, a solgel nanoimpring method may be used to realize nanopartterned ARC over large areas. The solgel nanoimpring method is compatible with high-througput roll-to-roll processing.

In an embodiment, said stamp may be a PDMS stamp, preferably a two-layer PDMS stamp.

In an embodiment, said inorganic solgel may comprise an oxide precursor, preferably silicium oxide, titanium oxide, hafnium oxide, zirconium oxide, tin oxide, zinc oxide and/or a germanium oxide precursor.

In yet another embodiment, said inorganic solgel may comprise tetramethylorthosilicate (TMOS or Si(OCH3)4) and/or methyltrimethoxysilane (MTMS, or C4H12O3Si).

In a further aspect, the invention relates to the use of a broadband omnidirectional antireflection structure as described above in an device, preferably an optical, electronic or optoelectronic device.

The invention will be further illustrated with reference to the attached drawings, which schematically will show embodiments according to the invention. It will be understood that the invention is not in any way restricted to these specific embodiments.

Brief description of the drawings

Fig. 1 depicts a nanopatterned ARC according to an embodiment of the invention.
Fig. 2 depicts the reflectivity of nanostructured glass ARC according to an embodiment of the invention.
Fig. 3 depicts the reflectivity of nanostructured glass ARC according to another embodiment of the invention.
Fig. 4 depicts the total polarization-averaged reflectivity spectrum according to an embodiment of the invention.
Fig. 5A and 5B depict the reflectivity spectrum of a glass substrate coated with an array of silica nanoparticles on both front and back sides and a photo of the substrate with the nanoparticles respectively.
Fig. 6 depicts the relation between the radius and the pitch of a nanopatterned ARC according to an embodiment of the invention.
Fig. 7 depicts a method of fabricating nanostructured glass ARC according to an embodiment of the invention.
Fig. 8 depicts a curved nanostructured glass ARC according to an embodiment of the invention.

Detailed description

The invention generally relates to a nanostructured broadband, omnidirectional antireflection coatings (ARC) that may be applied on a glass substrate and substrates of other materials. In an embodiment, a nanostructured glass ARC is described that is optimized for a particular substrate material, in this case a glass substrate in air with refractive index n of 1.50. In other embodiments however, the concept described in this disclosure may be applied to any type of substrates and substrate materials. For example, in an embodiment, glass materials having a refractive index within a range between 1,5 and 1,7 may be used. Alternatively and/or in addition, dielectric materials may be used having refractive index within a range between 1,4 and 4.

In an embodiment, a substrate may comprise one or more different layers of different materials. Substrate materials may comprise a polymer based materials including a polyimide or polyethylene naphthalate (PEN) and/or polyethylene terephthalate (PET), PEN or PET or derivatives thereof. Further, the substrate material may comprise a semiconductor, e.g. a III-V semiconductor or a type IV semiconductor such as silicon. In further embodiment a substrate may be composed of one or more layers of any of the above materials. The substrate may be part of an (optical) device, e.g. a screen of a display of a media device, a touchscreen, a television, the windshield of a car, a solar cell, an optolectronic device, etc.

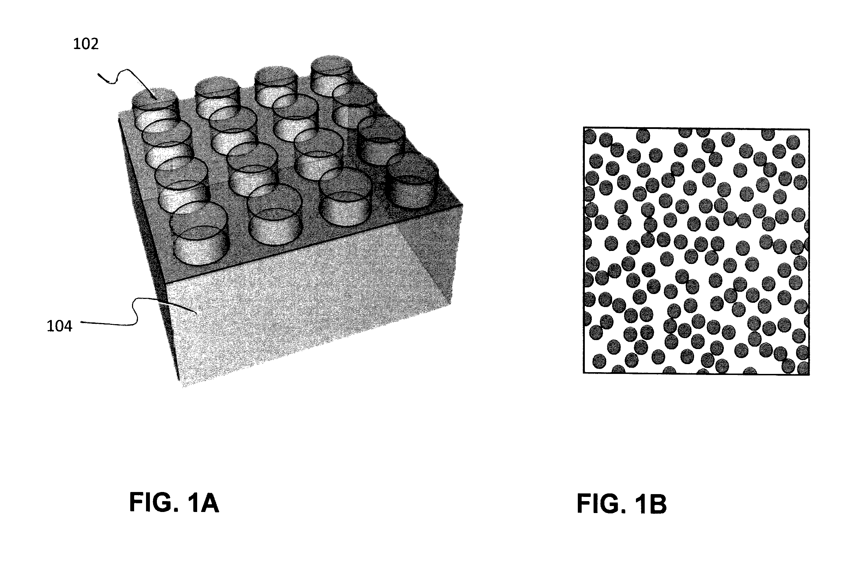

Fig. 1A shows a schematic of a nanostructured glass ARC according to an embodiment of the invention. The nanostructured ARC may comprise a periodic array of dielectric nanoparticles **102,** in this example glass nanocylinders, disposed on a substrate **104,** wherein the distance between the particles is determined by a pitch P and wherein the nanoparticles have certain dimensions depending on the shape of the particles (e.g. height H and radius R in case of a nanocylinder).

In the example of **Fig. 1A,** the dimensions of the glass nanocylinders and the pitch are selected such that the optical properties of the ARC in the visible spectrum are optimal for the glass substrate with refractive index 1.5. The nanocylinders may have a diameter of approximately 250 nm and a height of approximately 125 nm. The nanocylinders may be placed in a square array geometry with a pitch of approximately 350 nm so that the average effective index of the nanoparticle array is approximately 1,22. Further, the height of the nanoparticles may be selected to correspond to a predetermined wavelength band, preferably in the range between 500 and 600 nm, in which the antireflection properties are optimal. In other words, the effective index of the glass nanoparticle array substantially matches the optimal refractive index for a single-layer ARC.

In other embodiments, array geometries such as a hexagonal geometry and other nanoparticle shapes (e.g. cubic, pyramids, hemispherical, etc.) may be used as well. Furthermore, in another embodiment, the nanostructured ARC layer may comprise a layer comprising an array of nanoholes, e.g. cylindrical nanoholes. For the invention it is desired that the nanostructured array is homogeneous on the scale of the wavelength of the (visible) light.

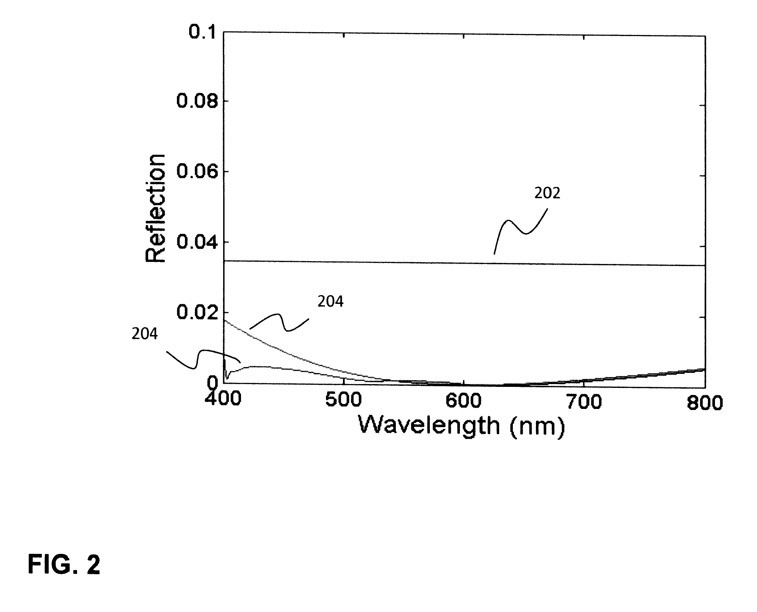

Fig. 2 depicts the total reflectivity spectrum 202 (specular and diffuse) of the nanoparticle ARC coated glass (in ambient air conditions) for light under normal incidence. The reflectivity 204 of an uncoated glass substrate with refractive index n=1.50 is shown for reference (~3.6%). As can be seen in Fig. 2, the glass nanocylinder array ARC substantially reduces the reflection of light from the glass substrate over the entire visible spectrum range between 400 and 800 nm. In particular, Fig. 2 shows that the average reflectivity in the visible spectral range is only 0.2%. The total reflectivity spectra may be determined using an integrating sphere measurement for total reflection that is well known in the art. In such measurement, the sample may be placed at the back of the integrating sphere, and illuminated with broadband light. The reflection is collected and integrated by the sphere (which is white inside) and sent to a spectrometer for registration.

Fig.2 further depicts the total reflectivity spectrum 206 for a similar glass substrate with a planar ARC with a refractive index n of 1.22 and a thickness of 125 nm. This index equals the (volume-averaged) effective index of the nanoparticle array layer wherein the thickness of the planar ARC is selected as being equal to the nanoparticle height. As is shown in Fig. 2, this effective index of the planar ARC approximation yields a reflectivity spectrum that very well matches that of the glass nanoparticle array ARC over the spectral range above 600 nm. This indicates that in this wavelength range the nanoparticle ARC effectively acts like an ARC layer with an effective index that depends on the filling fraction of the nanoparticle array. This will be discussed in more detail hereunder. For smaller wavelength, the effective-medium approximation gradually breaks down, which is attributed to the fact that the typical feature sizes of the nanoparticle array approaches the wavelength of light. Hence, Fig. 2 shows that the nanostructured ARC of the invention realizes very efficient ARC coatings on the basis of simple and cheap dielectric materials such as glass (silica) that have a refractive index that substantially matches the optimal refractive index for a single-layer ARC.

In a further embodiment, the nanoparticle array may also be realized in a random configuration in which the particles are randomly positioned on the substrate as is schematically depicted in Fig. 1B (top view of substrate). In that case, the random positions of the nanocylinders may be selected such that the surface coverage is the same as the regular optimized square array of Fig. 1A wherein particles may not overlap each other. In other words, the filling fraction of the random array is the same as the one of a regular square array.

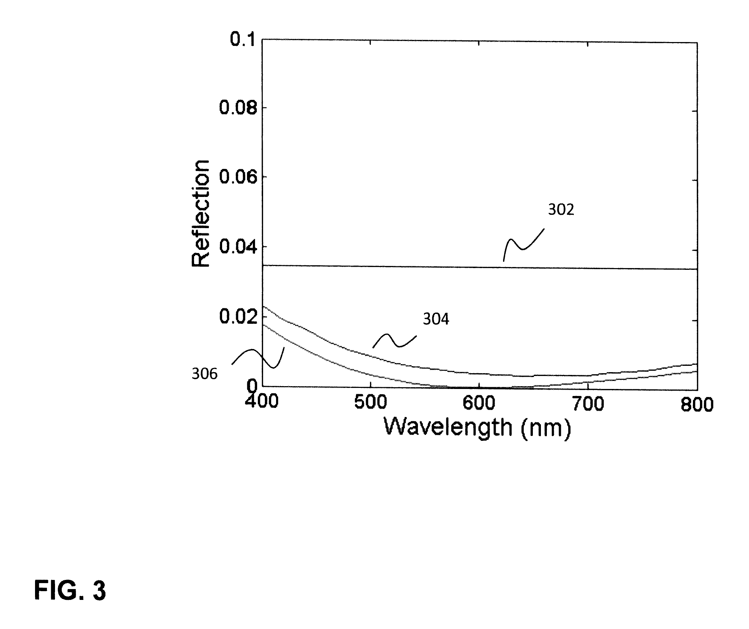

Fig. 3 depicts the total reflectivity spectrum 302 (specular and diffuse) of a random array of glass nanocylinders on glass (in ambient air conditions) of a refractive index of 1,5 for light under normal incidence to the substrate. The total reflectivity spectrum of uncoated glass is also shown for reference 304. As for the periodic array shown in Fig. 2, the reflectivity is substantially reduced compared to that of bare glass over the entire 400-800 nm spectral range. The average reflectivity over the 400-800 nm spectra range for the random nanoparticle ARC is 0.4%.

Fig. 3 further depicts the total reflectivity spectrum 306 of an effective-medium layer (similar to the one described with reference to Fig. 2). The nanopatterned ARC and the effective-medium ARC show reflectivity spectra with a similar trend with a slightly lower reflectivity for the planar layer over the entire spectral range. This effect may be attributed to local regions of varying filling fraction in the random array, and thus non-optimal, effective index.

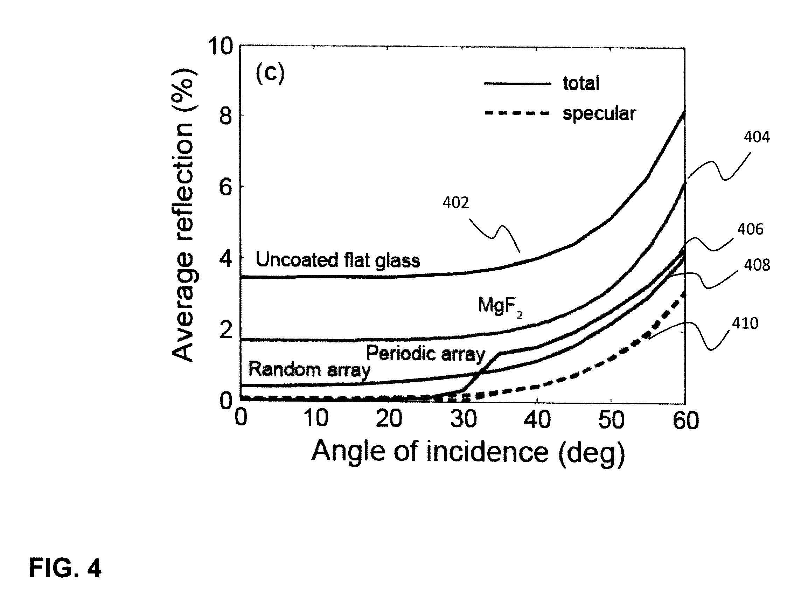

Fig. 4 depicts the total polarization-averaged reflectivity spectra (specular and diffuse) for ARCs (in ambient air conditions) at a wavelength of 600 nm as a function of angle of incidence (AOI). Reflectivity spectra are depicted for uncoated glass 402, glass coated with a 125-nm-thick MgF2 layer 404, and for nanoparticle ARCs composed of a periodic array 406 and a random array of glass nanocylinders similar to those described with reference to Fig. 1-3. For these spectra the reflectivity for s- and p- polarization are averaged. Fig. 4 shows that periodic and random arrays strongly reduce the reflectivity of uncoated glass for all angles of incidence. In both cases, the reflectivity increases up to ~4%, for an AOI of 60°. In contrast, the reflectivity for uncoated glass increases to approximately 8% at this angle and the reflectivity of glass coated with a MgF2 layer increases to approximately 6%.

In Fig. 4, the reflectivity for the periodic array shows a sudden step at an AOI of 30°, which is due to the reflection of non-specular grating orders that result from the regular array for AOIs larger than 30°. This effect may be eliminated by reducing the pitch of the array and/or the dimensions of the particles (e.g. the radius of the nanocyclinders). The effect of the non-specular grating orders may be eliminated by reducing the pitch so that - as a consequence - the dimensions of the nanoparticles (e.g. the radius of the nanocylinders) are also reduced in order to obtain the same filling fraction. When selecting a pitch smaller than 200 nm the effect is eliminated for all wavelengths in the visible spectrum (between approx. 400 and 800 nm) and all angles.

**Fig. 4** shows that for this example the periodic array performs better for smaller angles of incidence (approximately between 0 and 30 degrees), whereas the random array yields lower reflectivities for larger angles of incidence (approximately between 30 and 60 degrees). **Fig. 4** also shows the specular part of the reflectivity of the periodic and random arrays (dashed line). Specular reflection may cause unwanted glare from for example a computer or smartphone screen in sunlight. The graph thus surprisingly shows that the specular reflection of both a random and periodic nanostructured ARCs is below 1% for AOIs up to 50°. This is a major improvement over standard glass and even glass with an MgF2 coating. The nanoparticle ARC may thus be used to significantly reduce unwanted glare effects on glass surfaces. It is submitted that the advantageous properties are a result of the dielectric and geometrical parameters of the substrate and the nanoparticle disposed thereon. It does not rely on resonant effects, e.g. plasmonic or Mie resonances, which effectively make the nanoparticles scattering centres for the incident light.

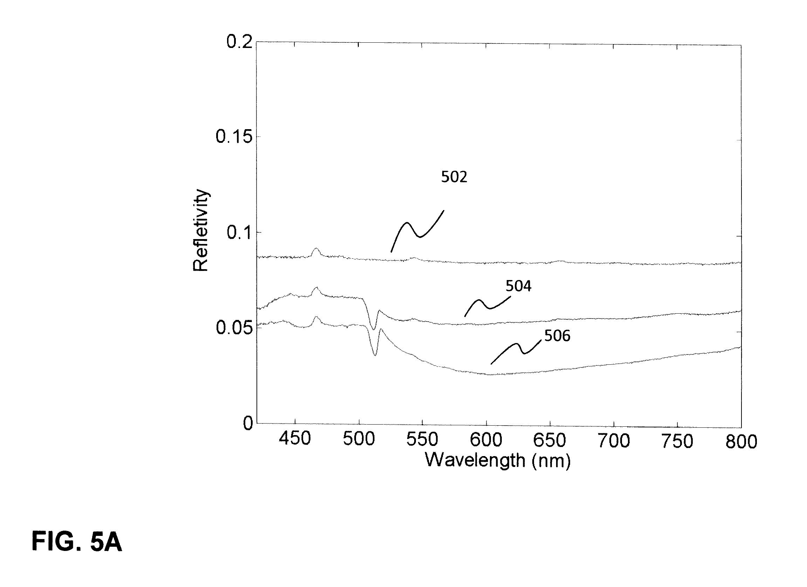

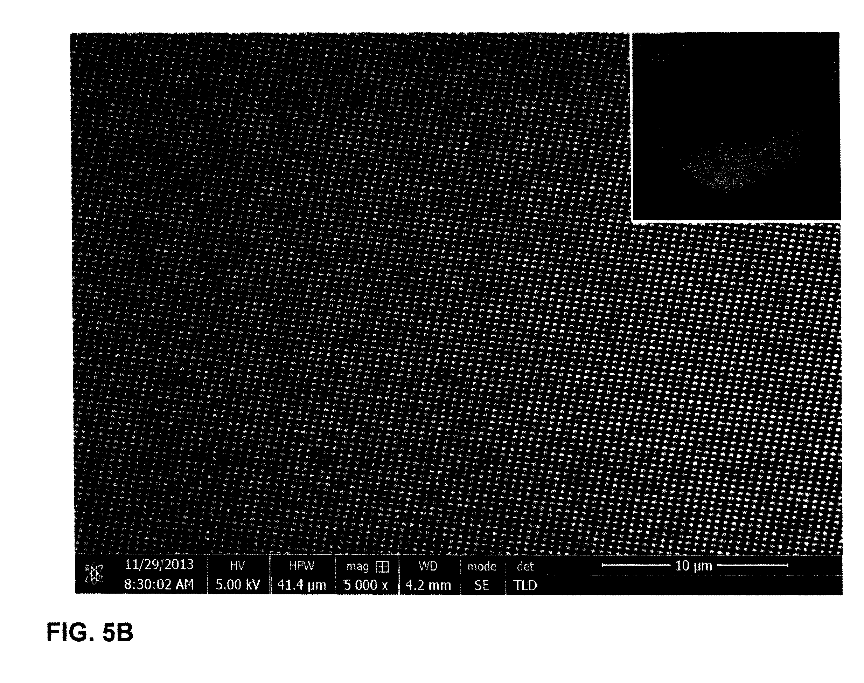

**Fig. 5A** depicts a measurement of the reflectivity spectrum of the glass substrate coated with an array of silica nanoparticles on the front side **502,** and a glass substrate that is coated with an array of silica nanoparticles on both front and backside **504.** A SEM photo of the array of nanocylinders (and a close-up of one nanocylinder) is depicted in **Fig. 5B.**

In this example, a non-optimal geometry for the nanostructured ARC coating was used, i.e. nanocylinders having a diameter of 250 nm and a height of 80 nm wherein the pitch of the array was selected to be 450 nm. Here, a non-optimal geometry implies that the fill fraction of the nanoparticle array deviates from the filling fraction that would result into an effective refractive index that matches the optimal the optimal refractive index for a single-layer ARC. The reflectivity **506** of the uncoated glass substrate is shown in **Fig. 5A** for reference.

Fig. 5A shows that the reflectivity of the uncoated glass amounts to approximately 8.5%, which is due to reflection of light at the air-glass interfaces at both the front and backside of the glass substrate. Positioning an array of silica nanoparticles at the front surface of the glass substrate reduces the reflectivity to approximately 6% averaged over the spectral range from 400-800 nm. Applying the silica nanoparticle coating also to the backside of the glass substrate further reduces the reflectivity to a minimum of 2.8% at a wavelength of 600 nm. The average reflectivity in this case is 3.7%. Hence, despite the non-optimality of the geometry of nanoparticle coating, the reflectivity is reduced by more than 50% using the nanoparticle coating on both sides of the glass substrate.

**Fig. 5B** shows that large area surfaces of glass nanocylinders may be fabricated with a very high yield. The nanostructured coating was fabricated using an imprint technique that is described hereunder in more detail.

The optimum design of nanostructured ARC as described above may be obtained on the basis of a number of design steps. Hereunder glass nanoparticles on a glass substrate in ambient air is described, however the principle applies any type of dielectric nanoparticle on a dielectric substrate. In a first step, it is determined which medium will be positioned above the glass substrate (e.g. air or water). This determines the refractive index of the medium $n_{medium}$. If the refractive index contrast between the substrate ($n_{sub}$) and the medium is known, the optimal effective refractive index of the ARC layer may be determined:

$$n_{eff} = \sqrt{n_{sub} n_{medium}}$$

This expression may be used to determine the filling fraction of the nanoparticle array that is needed for obtaining the effective index. This effective refractive index is determined by the combination of materials that are used in the substrate - nanoparticle system (for example a (silica) sol-gel based nanoparticle on a glass substrate in a particular medium, e.g. ambient air or water):

$$n_{eff} = \frac{V_{np} n_{np} + V_{medium} n_{medium}}{V_{np} + V_{medium}}$$

Here, $V_{np}$ corresponds to the volume of the nanoparticle material in a unit cell of the layer, and $V_{medium}$ is the volume of the medium in a unit cell of the layer. The geometrical filling fraction $\eta_G$ may be defined as the volume fraction of the nanoparticle material for a unit cell of the nanoparticle array:

$$\eta_G = \frac{V_{np}}{V_{np} + V_{medium}}$$

The above formulas may be rewritten in order to obtain the expression for the optimal filling fraction $\eta_{np}^*$ of an array of nanoparticles that is needed to obtain the optimum refractive index $n_{eff}$:

$$\eta_{np}^* = \frac{\sqrt{n_{sub}n_{medium}} - n_{medium}}{n_{np} - n_{medi}}$$

In an example of silica nanocylinders with radius $R$, height $H$ and pitch $P$, the radius to pitch ratio may be determined that gives rise to the ideal filling fraction. A unit cell of the square array of nanocylinders has a geometrical filling fraction of:

$$\eta_{G,np} = \frac{\pi R^2 H}{P^2 H} = \pi \left(\frac{R}{P}\right)^2$$

So, to get optimum $\frac{R}{P}$ fraction, the optimal filling fraction should be approximately equal to the geometrical filling fraction $\left(\eta_{G,np} \approx \eta_{np}^*\right)$ so that the following equation may be obtained:

$$\pi \left(\frac{R}{P}\right)^2 \approx \frac{\sqrt{n_{sub}n_{medium}} - n_{medium}}{n_{np} - n_{medium}}$$

Resulting into the following relation for the R/P ratio:

$$\frac{R}{P} \approx \frac{1}{\pi}\frac{\sqrt{n_{sub}n_{medium}} - n_{medium}}{n_{np} - n_{medium}}$$

For an array of holes (cylindrical with radius R and pitch P), the role of the particles and the medium has reversed. The refractive index of the holes equals that of the medium, whereas the rest of the volume $V_{coat}$ is occupied by the coating material (having refractive index $n_{coat}$) in which the holes are imprinted:

$$n_{eff} = \frac{V_{coat}n_{coat} + V_{holes}n_{medium}}{V_{coat} + V_{hole}}$$

The filling fraction for holes ($\eta_{holes}$) may be defined as:

$$\eta_{holes} = \frac{V_{holes}}{V_{coat} + V_{holes}}$$

so that the optimal filling fraction $\eta_h^*$ of an array of nanoholes that is needed to obtain the optimum refractive index $n_{eff}$ may be defined as:

$$\eta_h^* = \frac{\sqrt{n_{sub}n_{medium}} - n_{coat}}{n_{medium} - n_{coat}}$$

And thus, using cylindrically shaped holes, spaced $P$ apart, the geometrical filling fraction of the holes may be defined as:

$$\eta_{G,h} = \frac{\pi R^2 H}{P^2 H} = \pi \left(\frac{R}{P}\right)^2$$

By equating $\eta_{G,h} = \eta_h^*$, the optimum ratio of R/P for nanoholes may be found:

$$\frac{R}{P} = \frac{1}{\pi}\frac{\sqrt{n_{sub}n_{medium}} - n_{coat}}{n_{medium} - n_{coat}}$$

In the above expressions approximately equal may include deviations from the optimal filling fraction of 20% or less, preferably 10% or less, more preferably 5% or less. As shown in **Fig. 5** also nanoparticle ARCs that deviate from the optimal case may provide an advantageous ARC effect with respect to known ARC layers.

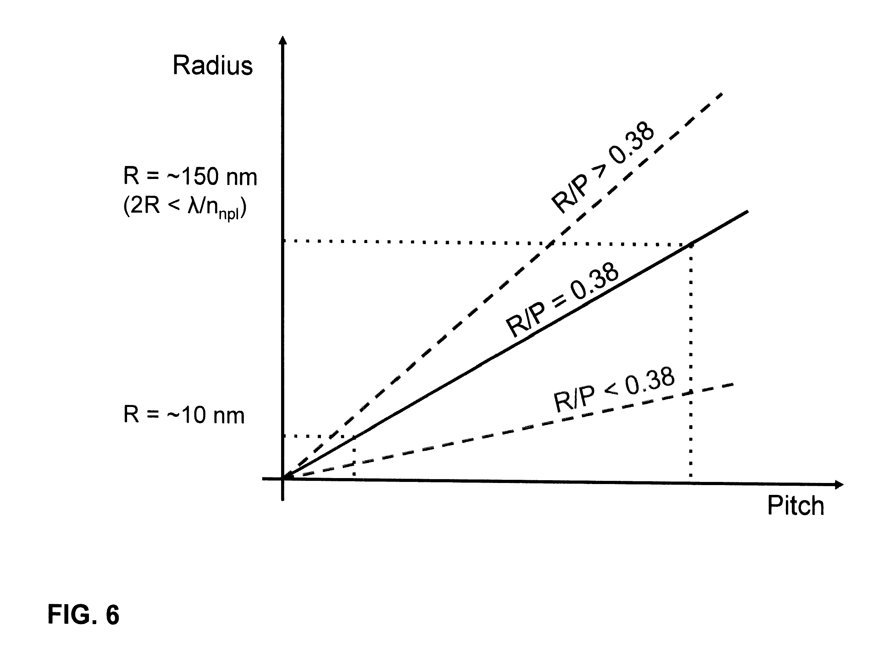

**Fig. 6** depicts the R/P ratio for different substrate materials. The radius R should be smaller than $\lambda/2n_{np}$ which is approximately 200 nm for $\lambda$=600nm. The lower limit of R is limited by the resolution that may be obtained by the method that is used for fabricating the nanoparticle array. For the nanoimprint technique that may be used to fabricate the nanostructured ARC the resolution is approximately 10 nm. Hence, from **Fig. 6** it can be seen that a set of optimal ARC coatings for a glass substrate n=1,5 can be defined. Each ARC coating in the set may have a different pitch and radius as long as the ratio is substantially the same. For example, for a regular (square) array of nanocylinders a set of optimal ARC coatings forms a line in the R,P plane (i.e. R/P=0,38).

The pitch may be selected to be smaller than 400 nm, preferably 200 nm, in order to avoid diffraction effects. In order to maintain the same filling fraction, also the radius of the nanocylinders should be made smaller. For substrates that have a refractive index larger than 1,5, a set of optimal ARC coatings may be defined by points on a line that is steeper than the one for n=1,5. Similarly, for substrates that have a refractive index smaller than 1,5, a set of optimal ARC coatings may be defined by points on a line that is less steeper than the one for n=1,5

Hence, the glass nanoparticle ARC according to the invention reduces the reflectivity of a typical glass surface by creating a layer with effective refractive index of 1,22. The effective-medium index corresponds to that of the volume-average index of nanoparticle layer composed of glass and air. This way, any nanoscale configuration of glass nanoparticles having the same geometrical filling fraction will yield a similar reflectivity. In the example for n=1,5, the optimal filling fraction is approximately 45%, which yields an average index of 1,22. For a periodic array, the optimal filling fraction corresponds to a (cylinder) radius-to-pitch ratio R/P of approximately 0,38. Thus, any array with such geometry would yield similar reflectivity (e.g. periodic arrays of particles with diameters of 200 and 400 nm should have pitches of 278 and 556, respectively). For periodic arrays, pitches smaller than 400 nm (for normal incidence only), preferably smaller than 200 nm (for all angles of incidence, up to 90 degrees), may be used in order to avoid diffraction effects from the grating formed by the nanoparticles.

In an embodiment, the nanoparticles in a random array may be equal in size (as those considered in **Fig. 2).** In another embodiment, the nanoparticles may be different in size, provided that the condition of the filling fraction is roughly equal to 45% in case of a glass substrate. Preferably, the nanoparticles have similar dimensions in order to avoid microscopic areas with different effective refractive indices as that would increase the reflectivity averaged over the surface.

In various embodiments, the glass nanoparticles may have specific shapes, such as for example hemisphere, sphere, truncated pyramid or truncated cone. In each case, the dimensions and surface coverage of the nanoparticles must be chosen such that the geometric filling fraction is roughly equal to optimal filling fraction $\eta^*$. In case of a glass substrate the geometric filling fraction may be approximately 45%.

The height of the nanoparticles may determine the thickness of the effective layer. The height may be chosen as one quarter of the wavelength for which the antireflection coating may be optimized wherein the wavelength is corrected for the effective refractive index in that layer, i.e. thickness = $\lambda/4n_{eff}$. For example, in an embodiment, the height may be chosen to yield minimal reflectivity for the wavelength range between 500 and 630 nm, which corresponds to the spectral range of maximum sensitivity of the human eye. This is the case for the ARC described with reference to **Fig. 2.**

In a different embodiment, a periodic or random array of holes or a combination of holes and particles, may be realized in a substrate (e.g. a glass substrate of approximately n=1.5) to obtain a layer with an effective index of n=1.22. In this case, the optimal filling fraction of holes may be 55%. When using a periodic array, this corresponds to a (hole) radius-to-pitch ratio R/P of 0.44. For example, periodic hole arrays with hole diameters 200 and 400 nm ideally have pitches of 228 and 456 nm. As described above pitches smaller than 400 nm, preferably smaller than 200 nm, may be used in order to avoid diffraction effects from the grating formed by the nanoholes.

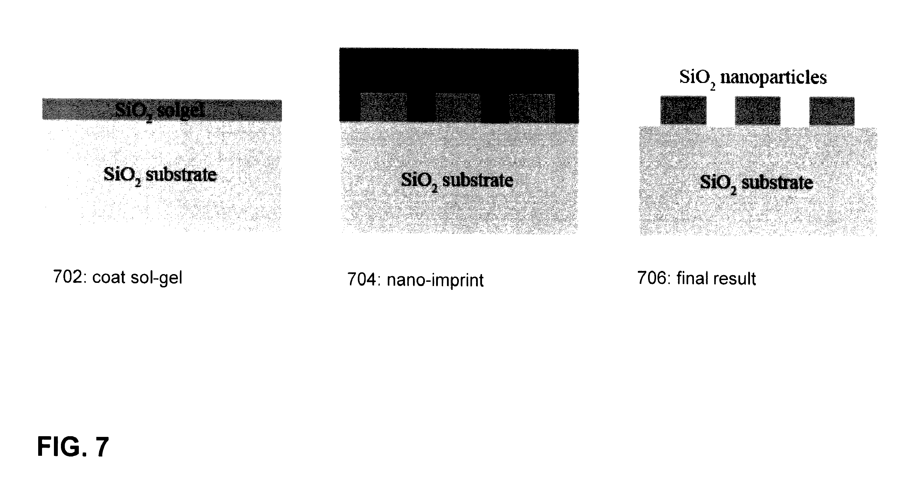

**Fig. 7** depicts a process for the manufacture of a nanostructured according to an embodiment of the invention. The nanostructured ARCs described may be realized using a soft imprint lithography method.

In an embodiment, the so-called substrate-conformal imprint lithography (SCIL) may be used to fabricate the nanostructured ARC coating. In this process first a master pattern is made, usually in a Silicon wafer, using e-beam or interference lithography followed by a non-isotropic reactive ion etching (RIE) step. The pattern may define an array of nanoparticles (e.g. nanocylinders) wherein the dimensions of the nanoparticles are selected such that the filling fraction of the nanoparticle array approximately matches the optimal filling fraction of a certain substrate / nanoparticle system.

In an embodiment, a PDMS rubber stamp may be realized for imprinting a solgel. The PDMS rubber stamp may have the inverse structure of a nanoparticle array. The layout of the nanoparticle array may be determined on the basis of a nanoparticle material and a substrate material that are associated with an optimal filling fraction. Hence, the inverse structure of the PDMS rubber stamp should be designed such that it allows the realization of a nanoparticle array that has a geometrical filling fraction that is approximately the same as the optimal filling fraction of the substrate / nanoparticle system.

In an embodiment, the PDMS stamp may comprise two layers of PDMS: a first high-Youngs modulus layer (H-PDMS) holding the features. This layer gives the imprinted features sharp corners and avoids adjacent features from collapsing or sticking together; and, a second low-Youngs modulus layer PDMS layer that is flexible and allows conformal contact to the substrate. The flexible stamp may be applied by a dedicated SCIL imprint mechanical tool or by hand.

In a first step **702** of the process of **Fig. 7,** a substrate, e.g. a glass substrate of n=1,5, may be coated with a layer of an inorganic solgel using a suitable coating technique e.g. spin-coating, pray-coating, dip-ocating, etc. In an embodiment, the organic solgel may contain silicon oxide or titanium oxide precursors. Preferably, in an embodiment, the solgel may comprise tetramethylorthosilicate (TMOS or Si(OCH3)4) and methyltrimethoxysilane (MTMS, or C4H12O3Si). In particular, a one-to-one molar ratio for TMOS to MTMS may be used. The silica solgel may be spin-coated on a glass wafer so that solgel layer is realized that has a thickness of approximately 50 through 100 nm.

Thereafter, in a second step **704,** a PDMS stamp that is patterned with the predetermined nanoparticle structure may be pressed into the solgel layer in order to perform the imprint. Due to capillary forces the solgel easily fills the nanoholes of the PDMS stamp.

In an embodiment, an curing step may be applied to the imprinted solgel wherein the solgel is exposed to UV light for 1-2 minutes. Alternatively, the imprinted solgel may be dried in air for about 20 minutes. Thereafer, the stamp may be removed and an array of solgel nanoparticles, in this case nanocylinders, may be obtained (step **706).** The height, diameter and pitch of the nanoparticles may be fully controlled by the stamp design. Instead of a UV and/or in addition to curing the imprinted solgetl, a heating step may be introduced in order to dry the solgel. The obtained silica nanoparticles have a refractive index with is substantially the same as the refractive index of the glass substrate.

On the basis of the SCIL imprint technique, large areas of nanostructures may be realized with feature sizes down to 10 nm with high uniformity. Other inorganic sol-gels may also be used e.g. spin-on-glass silica. Solgel precursors may include titanium oxide, hafnium oxide, zirconium oxide, tin oxide, zinc oxide or germanium oxide. The imprint technique is compatible with roll-to-roll coating techniques. The SCIL imprint technique guarantees that the antireflection properties provided by the array of glass nanoparticles are extremely uniform over the surface of glass substrates of a large size (e.g. windows, displays for computers and smartphones, solar panels, etc.).

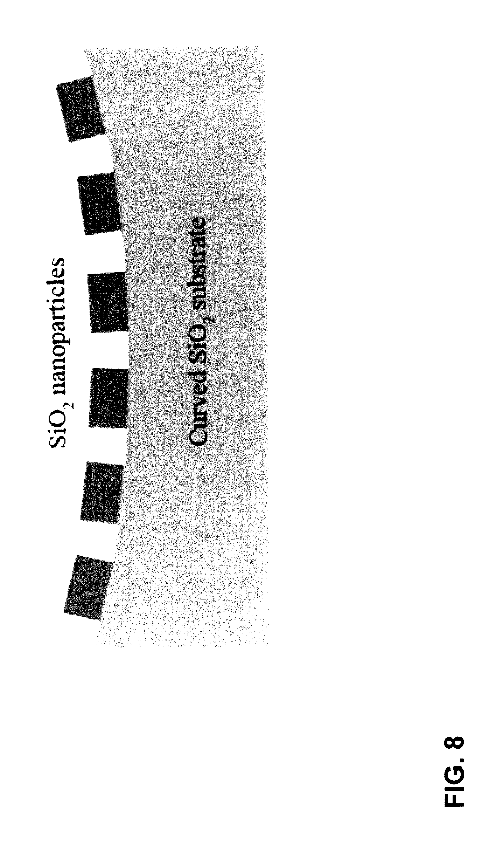

A major disadvantage of conventional single-layer dielectric and porous ARCs is that they are less effective on non-flat glass surfaces, due to difficulties in obtaining a uniform layer thickness over a curved substrate. Furthermore, these layers cannot be easily applied on a flexible glass substrate as they are often brittle so that cracks can appear when the substrate is bent. The glass nanoparticle coating presented in this invention can be easily made by soft nanoimprint lithography on a curved surface with high uniformity as shown in **Fig. 8.** The thickness of the effective nanoparticle ARC is determined by the nanoparticle height, which can be controlled with high precision and uniformity over large areas, both on flat and curved surfaces. Furthermore, since the nanoparticles are mechanically decoupled from each other, the nanoparticle coating is mechanically very robust.

Another advantage of the glass nanoparticle coating is that it offers the possibility to optimize the antireflection properties for a specific wavelength range which can vary for different applications. For example, a coating for displays and windows should be optimized for the spectral range where the human eyes sensitivity peaks; a coating for the glass panel of a solar module is ideally optimized for the wavelength range where the solar spectrum is more intense; etc. The antireflection properties of the nanoparticle coating can be easily optimized for different spectral ranges by changing the dimensions of the nanoparticles. Finally, the nano-glass geometry can also have hydrophobic properties, which is beneficial for many applications, such as solar modules or touchscreens.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A broadband omnidirectional antireflection structure comprising:

   a substrate and a nanopatterned antireflection coating, preferably a nanopatterned solgel antireflection coating, over said substrate, said coating comprising an array of nanoparticles and/or nanoholes,
   wherein the material of said substrate has refractive index $n_{sub}$, the material forming said nanoparticles has a refractive index $n_{np}$ and/or the material in which said nanoholes are formed has a refractive index $n_{coat}$,
   wherein said substrate and said nanoparticles and/or nanoholes are in contact with a medium having a refractive index $n_{medium}$;
   wherein the filling fraction of said nanoparticles

$\eta_{np}$ and/or nanoholes $\eta_{hol}$ approximately matches the optimal filling fraction of the nanoparticle system $\eta_{np}^*$ and/or the nanohole system $\eta_h^*$, the filling fraction $\eta_{np}$ for nanoparticles being defined as:

$$\eta_{np} = \frac{V_{np}}{V_{np} + V_{medium}}$$

where $V_{np}$ corresponds to the volume of the nanoparticle material in a unit cell of the layer, and $V_{medium}$ is the volume of the medium in a unit cell of the layer; and,

the optimal filling fraction $\eta_{np}^*$ of an array of nanoparticles being defined as:

$$\eta_{np}^* = \frac{\sqrt{n_{sub}n_{medium}} - n_{medium}}{n_{np} - n_{medium}}$$

the filling fraction $\eta_{holes}$ for nanoholes being defined as:

$$\eta_{holes} = \frac{V_{hol}}{V_{coat} + V_{hole}}$$

where $V_{holes}$ corresponds to the volume of the nanoholes in a unit cell of the layer, and $V_{coat}$ is the volume of coating material in a unit cell comprising the nanoholes; and,

the optimal filling fraction $\eta_h^*$ of an array of nanoholes being defined as:

$$\eta_h^* = \frac{\sqrt{n_{sub}n_{medium}} - n_{coat}}{n_{medium} - n_{coat}}$$

2. Antireflection structure according to claim 1 wherein the thickness of at least part of said nanoparticles and/or the depth of said nanoholes is approximately equal to $\lambda/4n_{eff}$ wherein $\lambda$ is the wavelength for which the antireflection coating is optimize, preferably $\lambda$ being selected in a range between 500 nm and 630 nm; and, wherein for an array of nanoparticles $n_{eff}$ is defined as:

$$n_{eff} = \frac{V_{np}n_{np} + V_{medium}n_{medium}}{V_{np} + V_{medium}}$$

and for an array of nanoholes $n_{eff}$ is defined as:

$$n_{eff} = \frac{V_{coat}n_{coat} + V_{hol} \; n_{medium}}{V_{coat} + V_{hole}}$$

3. Antireflection structure according to claims 1 or 2, wherein the material of said substrate is at least one of: glass, a polymer, a semiconductor, preferably silicon.

4. Antireflection structure according to any of claims 1-3 wherein the material of said substrate has a refractive index between 1,3 and 4, preferably between 1,4 and 2, more preferably 1,4 and 1,7.

5. Antireflection structure according to any of claims 1-4, wherein the material forming said nanoparticles and/or nanoholes is an oxide, preferably silicium oxide, titanium oxide, hafnium oxide, zirconium oxide, tin oxide, zinc oxide and/or germanium oxide.

6. Antireflection structure according to any of claims 1-5 wherein the material forming said nanoparticles and/or nanoholes has a refractive index between 1,3 and 4, preferably between 1,4 and 2, more preferably 1,4 and 1,7.

7. Antireflection structure according to any of claims 1-5 wherein at least part of said nanoparticles form array defined by a pitch P.

8. Antireflection structure according to any of claims 1-7 wherein at least part of said nanoparticles are shaped as a cylinder, hemisphere, sphere, truncated pyramid or truncated cone.

9. Antireflection structure according to any of claims 1-8 wherein said nanoparticles form an array having a pitch smaller than 400 nm, preferably smaller than 200 nm.

10. Antireflection structure according to any of claims 1-9 wherein at least part of said nanoparticles form an array of nanocylinders and the ratio between the radius of a nanocylinder and the pitch of said array approximately matching the following condition:

$$\frac{R}{P} \approx \frac{1}{\pi} \frac{\sqrt{n_{sub}n_{medium}} - n_{medium}}{n_{np} - n_{medium}}$$

or wherein at least part of said nanoparticles form an array of nanoholes and the ratio between the radius of a nanohole and the pitch of said array approximately matching the following condition:

$$\frac{R}{P} = \frac{1}{\pi} \frac{\sqrt{n_{sub}n_{medium}} - n_{coat}}{n_{medium} - n_{coat}}$$

11. Method of fabricating a broadband omnidirectional antireflection structure comprising:

   providing substrate having refractive index $n_{sub}$;
   applying an inorganic solgel coating over said substrate, said solgel coating having a refractive index $n_{np}$;
   transferring the nanostructures of said nanostructured imprint stamp into said solgel coating in order to form a nanopatterned antireflection coating over said substrate, said coating comprising an array of nanoparticles and/or nanoholes;
   wherein the filling fraction of said nanoparticles $\eta_{np}$ and/or nanoholes $\eta_{holes}$ approximately matches the optimal filling fraction of the nanoparticle system $\eta_{np}^{*}$ and/or the nanohole system $\eta_{h}^{*}$.

12. Method according to claim 11 wherein said stamp is a PDMS stamp, preferably a two-layer PDMS stamp.

13. Method according to claims 11 or 12 wherein said inorganic solgel comprises an oxide precursor, preferably silicium oxide, titanium oxide, hafnium oxide, zirconium oxide, tin oxide, zinc oxide and/or a germanium oxide precursor.

14. Method according to any of claims 11-13 wherein said inorganic solgel comprises tetramethylorthosilicate (TMOS or Si(OCH3)4) and methyltrimethoxysilane (MTMS, or C4H12O3Si)

15. Use of a broadband omnidirectional antireflection structure according to any of claims 1-10 in an device, preferably an optical, electronic or optoelectronic device.

**FIG. 1A**

**FIG. 1B**

EP 2 878 977 A1

FIG. 2

EP 2 878 977 A1

FIG. 3

FIG. 4

FIG. 5A

FIG. 5B

FIG. 6

SiO₂ nanoparticles

702: coat sol-gel      704: nano-imprint      706: final result

**FIG. 7**

EP 2 878 977 A1

FIG. 8

Europäisches
Patentamt

European
Patent Office

Office européen
des brevets

## EUROPEAN SEARCH REPORT

Application Number

EP 13 00 5573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/159698 A1 (TAGUCHI TOKIO [JP] ET AL) 12 July 2007 (2007-07-12)<br>* figure 11(a) *<br>* paragraphs [0007] - [0011] * | 1-15 | INV.<br>G02B1/11 |
| X | EP 1 416 303 A2 (HITACHI LTD [JP]) 6 May 2004 (2004-05-06)<br>* figure 13 *<br>* paragraphs [0099] - [0102] * | 1-15 | |
| X | US 2010/296168 A1 (SANO DAISUKE [JP]) 25 November 2010 (2010-11-25)<br>* paragraph [0065]; figure 11 * | 1,3-15 | |
| X | US 2013/155522 A1 (JEONG KI-HUN [KR] ET AL) 20 June 2013 (2013-06-20)<br>* figure 3 *<br>* paragraphs [0041] - [0044] * | 1,3-6,8,9,15 | |
| A | LI MINGTAO ET AL: "Large area direct nanoimprinting of SiO2-TiO2 gel gratings for optical applications",<br>JOURNAL OF VACUUM SCIENCE & TECHNOLOGY B: MICROELECTRONICSPROCESSING AND PHENOMENA, AMERICAN VACUUM SOCIETY, NEW YORK, NY, US, vol. 21, no. 2,<br>12 February 2003 (2003-02-12), pages 660-663, XP012009821,<br>ISSN: 0734-211X, DOI: 10.1116/1.1545736<br>* the whole document * | 5,6,13 | TECHNICAL FIELDS SEARCHED (IPC)<br><br>G02B |

-/--

The present search report has been drawn up for all claims

| Place of search | Date of completion of the search | Examiner |
|---|---|---|
| Munich | 25 March 2014 | Serbin, Jesper |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 13 00 5573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Andrea Cattoni: "Soft UV Nanoimprint Lithography: A Versatile Tool for Nanostructuration at the 20nm Scale" In: "Recent Advances in Nanofabrication Techniques and Applications", 2 December 2011 (2011-12-02), InTech, XP055109820, ISBN: 978-9-53-307602-7 pages 139-156, * Chapter 1.1; page 139 * | 12 | |
| A | K. RÓZGA-WIJAS ET AL: "Polysiloxane-silica hybrids from novel precursors by the sol-gel process", JOURNAL OF MATERIALS CHEMISTRY, vol. 15, no. 24, 3 May 2005 (2005-05-03), page 2383, XP055109824, ISSN: 0959-9428, DOI: 10.1039/b501833c * abstract * | 14 | |
| A | WO 2013/111567 A1 (FUJIFILM CORP [JP]) 1 August 2013 (2013-08-01) * figure 1 * | 1-15 | TECHNICAL FIELDS SEARCHED (IPC) |

The present search report has been drawn up for all claims

| Place of search | Date of completion of the search | Examiner |
|---|---|---|
| Munich | 25 March 2014 | Serbin, Jesper |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 00 5573

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2014

| Patent document cited in search report | | Publication date | Patent family member(s) | | Publication date |
|---|---|---|---|---|---|
| US 2007159698 | A1 | 12-07-2007 | JP | 4368384 B2 | 18-11-2009 |
| | | | JP | 4368415 B2 | 18-11-2009 |
| | | | JP | 4850270 B2 | 11-01-2012 |
| | | | JP | 2009166502 A | 30-07-2009 |
| | | | JP | 2009217278 A | 24-09-2009 |
| | | | KR | 20070044017 A | 26-04-2007 |
| | | | KR | 20080106595 A | 08-12-2008 |
| | | | TW | I290233 B | 21-11-2007 |
| | | | US | 2007159698 A1 | 12-07-2007 |
| | | | US | 2009211912 A1 | 27-08-2009 |
| | | | US | 2009252825 A1 | 08-10-2009 |
| | | | US | 2013242398 A1 | 19-09-2013 |
| | | | WO | 2006059686 A1 | 08-06-2006 |
| EP 1416303 | A2 | 06-05-2004 | EP | 1416303 A2 | 06-05-2004 |
| | | | EP | 2233564 A2 | 29-09-2010 |
| | | | JP | 5064435 B2 | 31-10-2012 |
| | | | JP | 2009187025 A | 20-08-2009 |
| | | | US | 2004125266 A1 | 01-07-2004 |
| | | | US | 2005095699 A1 | 05-05-2005 |
| | | | US | 2011135814 A1 | 09-06-2011 |
| US 2010296168 | A1 | 25-11-2010 | JP | 2010271534 A | 02-12-2010 |
| | | | US | 2010296168 A1 | 25-11-2010 |
| US 2013155522 | A1 | 20-06-2013 | KR | 20130057954 A | 03-06-2013 |
| | | | US | 2013155522 A1 | 20-06-2013 |
| WO 2013111567 | A1 | 01-08-2013 | JP | 2013152257 A | 08-08-2013 |
| | | | WO | 2013111567 A1 | 01-08-2013 |

EPO FORM P0459

For more details about this annex : see Official Journal of the European Patent Office, No. 12/82